# EUROPÄISCHE PATENTANMELDUNG

(11) **EP 4 101 352 A1**
(43) Veröffentlichungstag der Anmeldung: **14.12.2022**
(21) Anmeldenummer: 22174328.9
(22) Anmeldetag: 19.05.2022
(51) Int. Cl.: A47J 31/42, A47J 42/38, A47J 31/52

(54) **HAUSHALTSGERÄT MIT EINEM MAHLGUTBEHÄLTER UND EINEM MAHLWERK**

(30) Priorität: 08.06.2021 DE 102021205777
(71) Anmelder: BSH Hausgeräte GmbH, 81739 München (DE)
(72) Erfinder: Nerbl, Christian, 83512 Wasserburg am Inn (DE)

(57) **Zusammenfassung**

Die Erfindung betriff ein Haushaltsgerät (1), insbesondere einen Kaffeeautomaten, mit einem Mahlgutbehälter (2) und einem Mahlwerk (3), wobei Mahlgut (4) in dem Mahlgutbehälter (2) aufgenommen und dem Mahlwerk (3) in einem Zuführbereich (5) zugeführt werden kann, und wobei an dem Zuführbereich (5) ein Erfassungsmittel (6) zum Erfassen einer physikalischen Eigenschaft von in dem Zuführbereich (5) befindlicher Materie angeordnet ist.

## Beschreibung

Die vorliegende Erfindung betrifft ein Haushaltsgerät, insbesondere einen Kaffeeautomaten, mit einem Mahlgutbehälter und einem Mahlwerk, wobei Mahlgut in dem Mahlgutbehälter aufgenommen und dem Mahlwerk in einem Zuführbereich zugeführt werden kann.

Haushaltsgerät, insbesondere Kaffeeautomaten, mit einem Mahlgutbehälter und einem Mahlwerk sind hinlänglich bekannt. Üblicherweise ist eine Erfassungsmittel vorgesehen, das erfasst, ob in dem Mahlgutbehälter Mahlgut vorhanden ist, oder nicht, d. h. er leer ist. Hierzu ist z. B. aus WO 2014/045230 A1 bekannt, die Stromaufnahme oder das Geräusch des Mahlwerks zu überwachen, die sich beide deutlich verändern, wenn kein Mahlgut mehr vorhanden ist. Nachteilig dabei ist, dass die Veränderung der Stromaufnahme bzw. des Geräusches erst dann deutlich wird, wenn auch das Mahlwerk bereits leer gemahlen ist. Bei einem Kaffeeautomaten kann dadurch z. B. eine Menge gemahlener Bohnen für einen gewünschten Kaffee nicht mehr ausreichen, sodass der Kaffeebezug abgebrochen werden muss. Dies wirkt sich nachteilig auf den Komfort und die Nachhaltigkeit aus.

Darüber hinaus stellen rotierende Teile eines Mahlwerks und insbesondere eines leer gemahlenen Mahlwerks eine gewisse Verletzungsgefahr für eine Bedienperson dar. Daher ist es üblich, durch mechanische Mittel zu verhindern, dass die Bedienperson z. B. scharfkantige Mahlscheiben des Mahlwerks mit einem Finger berühren kann, wie z. B. aus EP 2 130 465 B1 bekannt. Jedoch können daher Fremdkörper wie z. B. in das Mahlgut gefallene Kunststoff- oder Metallteile, bei Kaffeebohnen in der Verpackung enthaltene Steine, Holzstücken und dergleichen, oft selbst dann nicht mehr entfernt werden, wenn sie von der Bedienperson entdeckt wurden. Solche Fremdkörper führen jedoch häufig zu einer Beschädigung des Mahlwerks.

Aufgabe der vorliegenden Erfindung ist es daher, die eingangs genannte Vorrichtung zu verbessern, insbesondere die genannten Nachteile zu überwinden, und besonders bevorzug den Schutz vor Verletzungen und gleichermaßen vor Beschädigungen bei erhöhtem Komfort und gleichermaßen verbesserter Nachhaltigkeit sicherzustellen.

Diese Aufgabe wird durch ein Haushaltsgerät mit den Merkmalen des Anspruchs 1 gelöst. Vorteilhafte Weiterbildungen der Erfindung sind Gegenstand der abhängigen Ansprüche.

Ein erfindungsgemäßes Haushaltsgerät, insbesondere ein erfindungsgemäßer Kaffeeautomat umfasst einen Mahlgutbehälter und einem Mahlwerk, wobei Mahlgut in dem Mahlgutbehälter aufgenommen und dem Mahlwerk in einem Zuführbereich zugeführt werden kann. Erfindungsgemäß ist an dem Zuführbereich ein Erfassungsmittel zum Erfassen einer physikalischen Eigenschaft von in dem Zuführbereich befindlicher Materie angeordnet. Dadurch wird ermöglicht, anstatt der bloßen An- oder Abwesenheit des Mahlguts auch zu erfassen, ob sich die Menge an Mahlgut im Zuführbereich reduziert und ob es Fremdkörper enthält und/oder z. B. eine Bedienperson in den Zuführbereich eingreift. Denn üblicherweise unterscheiden sich die physikalischen Eigenschaften menschlicher Finger oder von Fremdkörpern wie z. B. Steinen, Metallteilen oder Holzstücken, von den physikalischen Eigenschaften eines haushaltsüblichen Mahlguts, z. B. von Kaffeebohnen. Dadurch kann auch auf mechanische Mittel, die verhindern, dass die Bedienperson in den Zuführbereich greifen kann, verzichtet werden. So kann nicht nur frühzeitig und vor dem leer werden des Mahlwerks erkannt werden, dass Mahlgut nachzufüllen ist. Es kann darüber hinaus auch ein im Mahlgut befindlicher Fremdkörper wie z. B. ein Metallteil oder ein Stein nicht nur durch das Erfassungsmittel erkannt, sondern anschließend auch von der Bedienperson entfernt werden. So kann mit geringem Aufwand der Schutz vor Verletzungen und zugleich vor Beschädigungen bei erhöhtem Komfort und verbesserter Nachhaltigkeit sichergestellt werden.

Unter einem Mahlgutbehälter ist insbesondere ein Vorratsbehälter für Kaffeebohnen zu verstehen, auch Bohnenbehälter genannt, der zumindest eine Öffnung zum Befüllen mit Mahlgut aufweist. Der Mahlgutbehälter kann dabei zumindest abschnittsweise Trichterförmig gestaltet sein. Der Mahlgutbehälter kann auch den Zuführbereich aufweisen, über den das Mahlgut dem Mahlwerk zugeführt werden kann. Alternativ kann der Zuführbereich durch mindestens ein separates Bauteil zwischen dem Mahlgutbehälter und dem Mahlwerk gebildet sein.

Bei einer vorteilhaften Weiterbildung der erfindungsgemäßen Lösung ist das Erfassungsmittel eingerichtet, bei in dem Zuführschacht befindlichem Mahlgut und/oder einem in dem Zuführschacht befindlichen menschlichen Finger und/oder einem in dem Zuführschacht befindlichen Fremdkörper je ein spezifisches, insbesondere von einer anderen der genannten Alternativen und/oder Kombinationen unterscheidbares, Signal auszugeben. Dadurch wird eine besonders einfache und gleichermaßen präzise Umsetzung der erfindungsgemäßen Lösung ermöglicht, da ein Verarbeitungsaufwand für das Signal des Erfassungsmittels deutlich reduziert und das Signal im Haushaltsgerät deutlich schneller verarbeitet werden kann. Somit kann der Schutz vor Verletzungen und zugleich vor Beschädigungen besonders effektiv und gleichermaßen kostengünstig erreicht werden.

Bei einer weiteren vorteilhaften Weiterbildung der erfindungsgemäßen Lösung ist das Erfassungsmittel eingerichtet, bei einem mit Mahlgut gefüllten Zuführschacht und bei einem mit Luft gefülltem Zuführschacht je ein spezifisches und voneinander unterscheidbares Signal auszugeben. Insbesondere kann es eingerichtet sein, in mehreren Stufen zwischen vollständig mit Mahlgut gefüllt und vollständig mit Luft gefüllt je ein spezifisches und voneinander unterscheidbares Signal, oder ein kontinuierlich ein Verhältnis repräsentierendes Signal, auszugeben. Dadurch wird eine besonders komfortable und nachhaltige Umsetzung ermöglicht, da neben dem Schutz vor Verletzungen und Beschädigungen auch besonders einfach erkannt werden kann, dass das Mahlgut nur noch für eine bestimmte Menge oder Zeit ausreicht. Die Bedienperson kann dadurch führzeitig und insbesondere mehrfach mit steigender Dringlichkeit darauf hingewiesen werden, das Mahlgut nachzufüllen. Somit kann neben dem kostengünstig erreichbaren Schutz auch auf einfache und kostengünstige Weise der Bedienkomfort und die Nachhaltigkeit verbessert werden.

Bei einer weiteren vorteilhaften Weiterbildung der erfindungsgemäßen Lösung korreliert die physikalische Eigenschaft mit einer Dielektrizitätszahl ε der in dem Zuführbereich befindlicher Materie, insbesondere mit einer stoffabhängigen relativen Permittivität er der in dem Zuführbereich befindlichen Materie. Dadurch wird neben der vorteilhaften Unterscheidung zwischen Mahlgut und Fremdkörpern oder menschlichen Fingern auch auf einfache Weise ermöglicht, weitere Eigenschaften eines spezifischen Mahlguts, wie z. B. dessen Wassergehalt und/oder Ölgehalt, zu erfassen. Dies kann auch Rückschlüsse auf einen Alterungszustand oder eine lange Lagerung des Mahlguts bei hoher Luftfeuchtigkeit zulassen, da eine geringfügige Änderung der Dielektrizitätszahl bzw. der relativen Permittivität durch die Aufnahme der Luftfeuchtigkeit und den dadurch erhöhten Wassergehalt erfasst werden kann. Insbesondere bei getrocknetem oder geröstetem Mahlgut mit einem spezifischem Ölgehalt, wie z. B. bei Kaffeebohnen, kann dadurch auf einfache Weise auch ein Alterungsprozess festgestellt und Abhilfemaßnahmen vorgeschlagen werden.

Bei einer weiteren vorteilhaften Weiterbildung der erfindungsgemäßen Lösung entspricht das von dem Erfassungsmittel ausgegebene Signal in Echtzeit der gesamten relativen Permittivität εr der je aktuell im Zuführbereich befindlichen Materie. Dadurch kann einerseits besonders schnell und sicher erfasst werden, dass sich ein menschlicher Finger im Zuführbereich befindet. Andererseits kann so gleichermaßen verhindert werden, dass ein Mahlvorgang schon abgebrochen werden muss, wenn der Finger nur sehr kurz und sehr wenig tief in einen ungefährlichen Abschnitt des Zuführbereichs gelangt ist, um z. B. einen Fremdkörper zu entfernen. Insbesondere bei Kaffeeautomaten, bei denen sonst ggf. ein bereits halb zubereitetes Milchmischgetränk abgebrochen werden muss, kann somit der Bedienkomfort und die Nachhaltigkeit deutlich verbessert werden.

Bei einer weiteren vorteilhaften Weiterbildung der erfindungsgemäßen Lösung umfasst das Erfassungsmittel einen kapazitiven Sensor, insbesondere einen kapazitiven Ringsensor. Dadurch kann die Dielektrizitätszahl ε der im Zuführbereich befindlichen Materie bzw. deren relativen Permittivität εr besonders einfach und effektiv erfasst werden. Zudem sind kapazitive Sensoren einer erforderlichen Genauigkeit erhältlich und müssen für den Einsatz am Zuführbereich ggf. nur geringfügig angepasst werden. Ein kapazitiver Ringsensor ermöglicht über eine noch höhere erreichbare Genauigkeit hinaus auch die Erfassung eine Ortsveränderung eines durch die Drehbewegung des Mahlwerks im Mahlgut mitbewegten Fremdkörpers.

Bei einer weiteren vorteilhaften Weiterbildung der erfindungsgemäßen Lösung umfasst das Erfassungsmittel mindestens eine fest am Zuführschacht angeordnete kapazitive Sensorelektrode und mindestens eine innerhalb des Zuführschachts angeordnete, insbesondere mit einer Fördereinrichtung des Mahlwerks mitdrehend angeordnete, Masse-Elektrode. Somit kann die gesamte im Zuführschacht befindliche Materie erfasst werden, obwohl sich ein Kontrollfeld des Erfassungsmittels nur von einer Seite des Zuführschachts bis zur Fördereinrichtung erstrecken muss, d. h. vorteilhaft nur über die Hälfte eines Durchmessers des Zuführschachts. Dennoch kann die Sensorelektrode als Ringsensorelektrode ausbildet sein und so die gesamte Materie im Zuführschacht gleichzeitig erfasst werden. Das Mahlgut bzw. die Materie kann in diesen beiden Fällen im Zuführschacht als rotierend bewegte Masse auch bei einem hohen Mahlgutdurchsatz lange genug im Kontrollfeld des Erfassungsmittels verbleiben, um eine solide Messauflösung und ein zuverlässiges Signal zu gewährleisten.

Bei einer weiteren vorteilhaften Weiterbildung der erfindungsgemäßen Lösung ist eine Steuerungseinrichtung vorgesehen und eingerichtet, das Mahlwerk, insbesondere eine Mahldauer, ein Mahlgrad und/oder eine Mahlgradverteilung, in Abhängigkeit des Signals des Erfassungsmittels anzusteuern. Dadurch wird auf besonders einfache Art und Weise ein konstantes oder genau definiertes Mahlergebnis auch dann ermöglicht, wenn der erfasste Wassergehalt und/oder Ölgehalt des Mahlguts sich, z. B. durch lange Lagerung oder hoher Luftfeuchtigkeit, geringfügig geändert hat, oder Mahlgut mit einem anderen Wassergehalt und/oder Ölgehalt, z. B. mit einer stärkeren Röstung, eingefüllt wurde. Dies ermöglicht auch eine weitere Verbesserung der Nachhaltigkeit, da auch mit länger gelagertem Mahlgut noch zufriedenstellende Mahlergebnisse erzielt werden können.

Bei einer weiteren vorteilhaften Weiterbildung der erfindungsgemäßen Lösung ist die Steuerungseinrichtung eingerichtet, eine Drehbewegung des Mahlwerks in Echtzeit anzuhalten und/oder umzukehren, sobald das aktuell vom Erfassungsmittel ausgegebene Signal dem spezifischen für einen in dem Zuführschacht befindlichen menschlichen Finger oder Fremdkörper entspricht. Dadurch wird auf besonders vorteilhafte Weise ermöglicht, ohne Sicherheitsrisiken und ohne Einbußen bei der Nachhaltigkeit oder dem Komfort auf mechanische Eingriffschutzmittel zu verzichten.

Bei einer weiteren vorteilhaften Weiterbildung der erfindungsgemäßen Lösung ist die Steuerungseinrichtung eingerichtet, unterschiedliche Brühparameter für eine ausgewählte Zubereitung eines Getränkes, insbesondere einen Brühdruck, eine Brühgeschwindigkeit und/oder einen Brühtemperaturverlauf, in Abhängigkeit des Signals des Erfassungsmittels anzusteuern. Dadurch wird auf besonders einfache Art und Weise ein konstantes oder genau definiertes Brühergebnis auch dann ermöglicht, wenn der erfasste Wassergehalt und/oder Ölgehalt des Mahlguts sich geringfügig geändert hat, oder Mahlgut mit einem anderen Wassergehalt und/oder Ölgehalt, z. B. mit einer stärkeren Röstung, eingefüllt wurde. Auch dies ermöglicht eine weitere Verbesserung der Nachhaltigkeit, da auch mit länger gelagertem Mahlgut noch zufriedenstellende Brühergebnisse erzielt werden können.

Bei einer weiteren vorteilhaften Weiterbildung der erfindungsgemäßen Lösung ist die Steuerungseinrichtung eingerichtet, das Signal des Erfassungsmittels durch einen Abgleich mit einer gespeicherten, oder über eine Internetschnittstelle erreichbaren, Datenbank einem spezifischen Röstgrad und/oder einer spezifischen Sorte des Mahlguts zuzuordnen und eine dementsprechend in der Datenbank hinterlegte Einstellungsanpassung für das Ansteuern des Mahlwerks und/oder einem der Brühparameter auszuführen oder vorzuschlagen. Dadurch kann insbesondere der Komfort weiter verbessert und eine Kundenzufriedenheit weiter erhöht werden, ohne dass für diese Komforterhöhung ein weiteres, über das bereits für die Sicherheit und die Fremdkörpererfassung genutztes, Erfassungsmittel benötigt wird. Durch diese Funktionenkombination kann die Komforterhöhung auf besonders nachhaltige Weise erreicht werden.

Somit kann durch die erfindungsgemäße Lösung und die genannten vorteilhaften Weiterbildungen ein besonders effektiver Schutz vor Verletzungen und gleichermaßen vor Beschädigungen bei erhöhtem Komfort und gleichermaßen verbesserter Nachhaltigkeit sichergestellt werden.

Weitere Vorteile und vorteilhafte Ausgestaltungen ergeben sich aus der im Folgenden in Verbindung mit den Figuren 1 bis 2 beschriebenen Ausführungsform. Es zeigen:
- Figur 1: ein schematisch dargestelltes erfindungsgemäßes Haushaltsgerät in der Seitenansicht als Teilschnittbild,
- Figur 2: eine erste Ausführungsform des Mahlgutbehälters und des Mahlwerks des Haushaltsgeräts 1 aus Figur 1 in der Seitenansicht als Teilschnittbild,
- Figur 3: die Ausführungsform aus Figur 1 mit stilisierten Sensorfeldlinien,
- Figur 4: eine zweite Ausführungsform des Mahlgutbehälters und des Mahlwerks des Haushaltsgeräts 1 aus Figur 1 in der Seitenansicht als Teilschnittbild, und
- Figur 5: die Ausführungsform aus Figur 4 mit stilisierten Sensorfeldlinien.

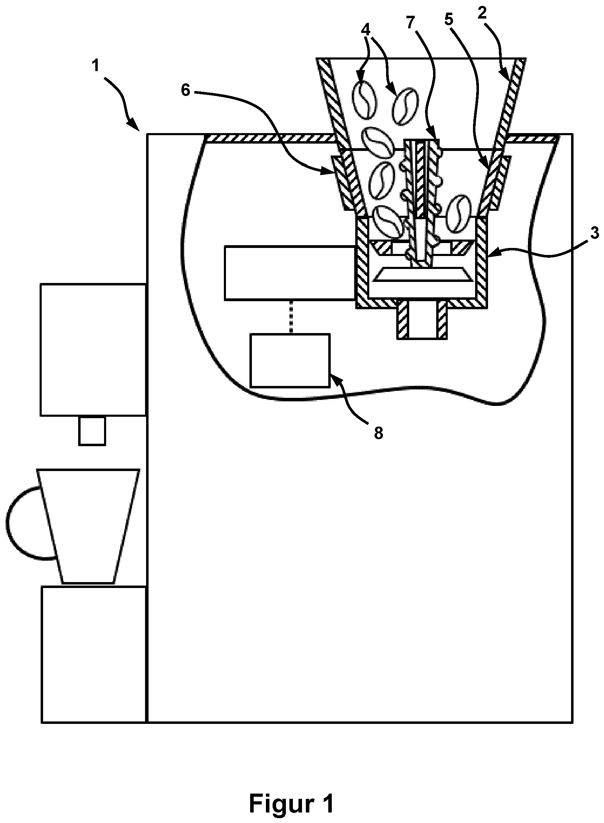

In Figur 1 ist ein Teilschnittbild eines schematisch dargestellten Ausführungsbeispiels eines erfindungsgemäßen Haushaltsgeräts 1 dargestellt. Sie zeigt ein Haushaltsgerät 1, hier als Kaffeeautomat ausgeführt, mit einem Mahlgutbehälter 2 und einem Mahlwerk 3, wobei Mahlgut 4 in dem Mahlgutbehälter 2 aufgenommen werden kann, bevor es dem Mahlwerk 3 in einem Zuführbereich 5 zugeführt wird. Das dargestellte Mahlwerk 3 umfasst eine feststehende obere Mahlscheibe, hier im Teilschnitt dargestellt, und eine drehbare untere Mahlscheibe. Die untere Mahlscheibe wird um eine vertikal dargestellte Drehachse gedreht. Hierfür ist sie über ein nicht dargestelltes Schneckengetriebe von einem stilisiert dargestellten Elektromotor angetrieben, dessen Drehachse als horizontale Strichpunktlinie angedeutet ist. Unterhalb der untere Mahlscheibe ist, ebenfalls stilisiert dargestellt, ein Ausgabeschacht für das zu Pulver gemahlene Mahlgut 3 erkennbar. Am Zuführbereich 5 ist ein Erfassungsmittel 6 zum Erfassen einer physikalischen Eigenschaft einer im Zuführbereich 5 befindlichen Materie angeordnet. Das Erfassungsmittel 6 ist eingerichtet, bei in dem Zuführschacht 5 befindlichem Mahlgut 4 und/oder einem in dem Zuführschacht 5 befindlichen menschlichen Finger und/oder einem in dem Zuführschacht 5 befindlichen Fremdkörper je ein spezifisches Signal auszugeben, das sich von jeder anderen der genannten Alternativen und/oder Kombinationen unterscheidet.

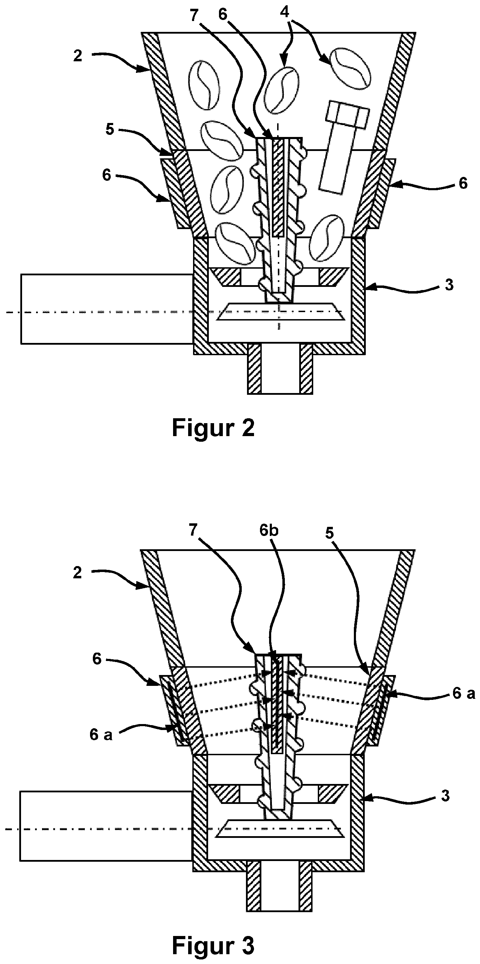

Bei der in Figur 2 dargestellten Situation befindet sich in dem Zuführschacht 5 neben dem üblichen Mahlgut 4, hier Kaffeebohnen, auch ein Fremdkörper, hier eine Schraube aus Metall. Daher unterscheidet sich das vom Erfassungsmittel 6 ausgegebene Signal auch von demjenigen in einer Situation, bei der sich kein Fremdkörper und nur Kaffeebohnen als Mahlgut 4 im Zuführschacht 5 befinden. Ebenfalls gibt das Erfassungsmittel 6 ein anderes spezifisches Signal aus, wenn sich ein menschlicher Finger in dem Zuführschacht 5 befindet. Auch für jede mögliche Kombination daraus gibt das Erfassungsmittel 6 je ein anderes spezifisches Signal aus.

Wie in den Figuren 2 bis 5 genauer dargestellt, umfasst das Erfassungsmittel 6 einen kapazitiven Ringsensor 6 mit einer Sensorelektrode 6 a und einer Masse-Elektrode 6 b. Im dargestellten Ausführungsbeispiel korreliert die erfasste physikalische Eigenschaft der Materie im Zuführbereich 5 daher mit deren Dielektrizitätszahl ε, denn der kapazitive Ringsensor 6 erfasst die relative Permittivität εr der in dem Zuführbereich 5 befindlichen Materie. Denn die relative Permittivität εr von menschlichen Fingern oder von Fremdkörpern wie z. B. Steinen, Metallteilen oder Holzstücken, unterscheiden sich von der eines haushaltsüblichen Mahlguts 4, hier von Kaffeebohnen. Bei der Entwicklung des Haushaltsgeräts 1 können für alle denkbaren Kombinationen spezifische Signalwerte ermittelt und festgelegt werden. Dadurch kann ein in den Zuführbereich 5 greifender menschlicher Finger erkannt und das Mahlwerk 3 gestoppt werden. So kann auf mechanische Mittel, die verhindern, dass die Bedienperson in den Zuführbereich 5 greifen kann, verzichtet werden. Daher kann auch der im Mahlgut befindliche Fremdkörper, in Figur 2 als Schraube dargestellt, nicht nur durch das Erfassungsmittel 6 erkannt, sondern anschließend auch von der Bedienperson entfernt werden.

Eine in Figur 1 erkennbare Steuerungseinrichtung 8 kann eine Drehbewegung des Mahlwerks 5 in Echtzeit anhalten und ggf. umkehren, bevor die dargestellte Schraube die Mahlscheiben erreicht und das Mahlwerk beschädigt werden würde, da das vom Erfassungsmittel 6 aktuell ausgegebene Signal dem spezifischen für einen in dem Zuführschacht 5 befindlichen Fremdkörper entspricht. Gleiches gilt für einen in dem Zuführschacht 5 befindlichen menschlichen Finger, wobei hier eine Verletzung der Bedienperson verhindert und eine Sicherheitsfunktion erfüllt wird. Die Steuerungseinrichtung 8 ist auch eingerichtet, unterschiedliche Brühparameter für eine ausgewählte Zubereitung eines Getränkes, hier einen Brühdruck, eine Brühgeschwindigkeit und einen Brühtemperaturverlauf, in Abhängigkeit des Signals des Erfassungsmittels 6 anzupassen. Durch einen Abgleich des Signals des Erfassungsmittels 6 mit einer gespeicherten und in regelmäßigen Abständen über eine Internetschnittstelle aktualisierten Datenbank kann die Steuerungseinrichtung 8 darüber hinaus die spezifische Sorte des aktuell eingefüllten Mahlguts 4 und deren spezifischen Röstgrad bestimmen. Über die Datenbank kann sie entsprechend zugeordnete und hinterlegte Einstellungsanpassung für das Ansteuern des Mahlwerks 5 und der Brühparameter auszuführen. Dadurch wird durch das für die Sicherheit und die Fremdkörpererfassung genutzte Erfassungsmittel 6 auch der Komfort weiter verbessert und die Kundenzufriedenheit weiter erhöht, ohne dass weitere Sensoren benötigt werden. Durch diese Funktionenkombination wird die Komforterhöhung auf besonders nachhaltige Weise erreicht.

Wie in Figur 3 erkennbar, umfasst das Erfassungsmittel 6 in einer ersten Ausführungsform nach Figur 2 und 3 eine kapazitive Sensorelektrode 6 a und eine innerhalb des Zuführschachts 5 angeordnete Masse-Elektrode 6 b. Die kapazitive Sensorelektrode 6 a ist fest am Zuführschacht 5 auf dessen Außenseite angeordnet und die Masse-Elektrode 6 b ist an einer Fördereinrichtung 7 des Mahlwerks 3 mitdrehend angeordnet. Die kapazitive Sensorelektrode 6 a ist in umlaufend in den kapazitiven Ringsensor 6 eingebettet. Wie durch die Sensorfeldlinien, schematisch dargestellt als gestrichelte Pfeile, erkennbar, muss sich daher das Sensorfeld nur über den halben Durchmesser des Mahlwerks 3 erstrecken, um die innerhalb befindliche Materie vollständig zu erfassen. Da beim Mahlen des Mahlguts 4 im Zuführschacht 5 üblicherweise ein leichter Rückstau des Mahlguts 4 auftritt, entspricht das von dem Erfassungsmittel 6, 6a, 6b ausgegebene Signal in Echtzeit der gesamten relativen Permittivität εr der je aktuell im Zuführbereich 5 befindlichen Materie.

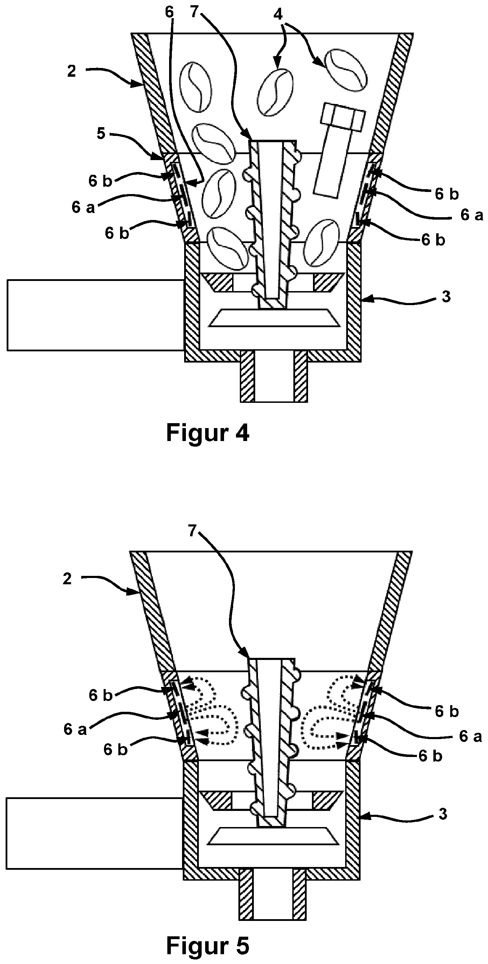

Eine zweite Ausführungsform des Mahlgutbehälters und des Mahlwerks des Haushaltsgeräts 1 aus Figur 1 ist in den Figuren 4 und 5 dargestellt. Wie in Figur 4 erkennbar, sind eine kapazitive Ring-Sensorelektrode 6 a und zwei Ring-Masse-Elektroden 6 b an einer Innenseite des Zuführschachts 5 angeordnet. Die kapazitive Sensorelektrode 6 a und die Masse-Elektroden 6b sind hier umlaufend in den kapazitiven Ringsensor 6 eingebettet. Alternativ könnten jedoch auch eine oder mehrere einzelne und dem Schnittbild entsprechend aufgebaute Platinen am Umfang des Zuführschachts 5 angeordnet sein. Wie in Figur 5 durch die Sensorfeldlinien, schematisch als gestrichelte Pfeile dargestellt, erkennbar, erstreckt sich das Sensorfeld bei dieser Ausführungsform entlang einer Innenoberfläche des Zuführschachts 5. Durch die Ausführung als RingElektroden, oder eine geeignete Anzahl und Verteilung einzelner der genannten Platinen, wird die innerhalb des Zuführschachts 5 befindliche Materie vollständig erfasst.

Die in den Ausführungsbeispielen dargestellten Bestandteile wie z. B. der Mahlgutbehälter 2 und das Mahlwerk 3 sowie deren Größenverhältnisse zueinander sind grundsätzlich nicht als maßstabsgerecht anzusehen. Vielmehr können einzelne Elemente wie beispielsweise der Zuführbereich 5 und die Masse-Elektrode 6b zur besseren Darstellbarkeit und/oder zum besseren Verständnis übertrieben dick oder groß dimensioniert dargestellt sein. Die Erläuterung des erfindungsgemäßen Haushaltsgeräts 1 anhand der beschriebenen Ausführungsbeispiele ist nicht als Beschränkung der Erfindung auf diese zu betrachten. Vielmehr umfasst die Erfindung jedes neue Merkmal sowie jede Kombination von Merkmalen, auch wenn dieses Merkmal oder diese Kombination selbst, z. B. hinsichtlich der Anzahl oder Anordnung verschiedener der Elektroden, nicht explizit in den Patentansprüchen oder den Ausführungsbeispielen angegeben ist.

### BEZUGSZEICHENLISTE

- 1: Haushaltsgerät, hier als Kaffeeautomat ausgeführt
- 2: Mahlgutbehälter
- 3: Mahlwerk
- 4: Mahlgut
- 5: Zuführbereich
- 6: Erfassungsmittel
- 6 a: kapazitive Sensorelektrode
- 6 b: Masse-Elektrode
- 7: Fördereinrichtung
- 8: Steuerungseinrichtung

## Patentansprüche

1. Haushaltsgerät (1), insbesondere Kaffeeautomat, mit einem Mahlgutbehälter (2) und einem Mahlwerk (3), wobei Mahlgut (4) in dem Mahlgutbehälter (2) aufgenommen und dem Mahlwerk (3) in einem Zuführbereich (5) zugeführt werden kann, **dadurch gekennzeichnet, dass** an dem Zuführbereich (5) ein Erfassungsmittel (6) zum Erfassen einer physikalischen Eigenschaft von in dem Zuführbereich (5) befindlicher Materie angeordnet ist.

2. Haushaltsgerät (1) nach Anspruch 1, **dadurch gekennzeichnet, dass** das Erfassungsmittel (6) eingerichtet ist, bei in dem Zuführschacht (5) befindlichem Mahlgut (4) und/oder einem in dem Zuführschacht (5) befindlichen menschlichen Finger und/oder einem in dem Zuführschacht (5) befindlichen Fremdkörper je ein spezifisches, insbesondere von einer anderen der genannten Alternativen und/oder Kombinationen unterscheidbares, Signal auszugeben.

3. Haushaltsgerät (1) nach Anspruch 1 oder 2, **dadurch gekennzeichnet, dass** das Erfassungsmittel (6) eingerichtet ist, bei einem mit Mahlgut (4) gefüllten Zuführschacht (5) und bei einem mit Luft gefülltem Zuführschacht (5) je ein spezifisches und voneinander unterscheidbares Signal auszugeben, insbesondere in mehreren Stufen zwischen vollständig mit Mahlgut (4) gefüllt und vollständig mit Luft gefüllt je ein spezifisches und voneinander unterscheidbares Signal, oder ein kontinuierlich ein Verhältnis repräsentierendes Signal, auszugeben.

4. Haushaltsgerät (1) nach Anspruch 1, 2 oder 3, **dadurch gekennzeichnet, dass** die physikalische Eigenschaft mit einer Dielektrizitätszahl ε der in dem Zuführbereich (5) befindlicher Materie korreliert, insbesondere mit einer stoffabhängigen relativen Permittivität εr der in dem Zuführbereich (5) befindlichen Materie.

5. Haushaltsgerät (1) nach Anspruch 2, 3 oder 4, **dadurch gekennzeichnet, dass** das von dem Erfassungsmittel (6) ausgegebene Signal in Echtzeit der gesamten relativen Permittivität εr der je aktuell im Zuführbereich (5) befindlichen Materie entspricht.

6. Haushaltsgerät (1) nach einem der Ansprüche 1 bis 5, **dadurch gekennzeichnet, dass** das Erfassungsmittel (6) einen kapazitiven Sensor umfasst, insbesondere einen kapazitiven Ringsensor.

7. Haushaltsgerät (1) nach einem der Ansprüche 1 bis 6, **dadurch gekennzeichnet, dass** das Erfassungsmittel (6) mindestens eine fest am Zuführschacht (5) angeordnete kapazitive Sensorelektrode (6 a) und mindestens eine innerhalb des Zuführschachts (5) angeordnete, insbesondere mit einer Fördereinrichtung (7) des Mahlwerks (3) mitdrehend angeordnete, Masse-Elektrode (6 b) umfasst.

8. Haushaltsgerät (1) nach einem der Ansprüche 2 bis 7, **dadurch gekennzeichnet, dass** eine Steuerungseinrichtung (8) vorgesehen und eingerichtet ist, das Mahlwerk (5), insbesondere eine Mahldauer, ein Mahlgrad und/oder eine Mahlgradverteilung, in Abhängigkeit des Signals des Erfassungsmittels (6) anzusteuern.

9. Haushaltsgerät (1) nach Anspruch 8, **dadurch gekennzeichnet, dass** die Steuerungseinrichtung (8) eingerichtet ist, eine Drehbewegung des Mahlwerks (5) in Echtzeit anzuhalten und/oder umzukehren, sobald das aktuell vom Erfassungsmittel (6) ausgegebene Signal dem spezifischen für einen in dem Zuführschacht (5) befindlichen menschlichen Finger oder Fremdkörper entspricht.

10. Haushaltsgerät (1) nach Anspruch 8 oder 9, **dadurch gekennzeichnet, dass** die Steuerungseinrichtung (8) eingerichtet ist, unterschiedliche Brühparameter für eine ausgewählte Zubereitung eines Getränkes, insbesondere einen Brühdruck, eine Brühgeschwindigkeit und/oder einen Brühtemperaturverlauf, in Abhängigkeit des Signals des Erfassungsmittels (6) anzusteuern.

11. Haushaltsgerät (1) nach einem der Ansprüche 8 bis 10, **dadurch gekennzeichnet, dass** die Steuerungseinrichtung (8) eingerichtet ist, das Signal des Erfassungsmittels (6) durch einen Abgleich mit einer gespeicherten, oder über eine Internetschnittstelle erreichbaren, Datenbank einem spezifischen Röstgrad und/oder einer spezifischen Sorte des Mahlguts (4) zuzuordnen, und eine dementsprechend in der Datenbank hinterlegte Einstellungsanpassung für das Ansteuern des Mahlwerks (5) und/oder einem der Brühparameter auszuführen oder vorzuschlagen.
